# EUROPEAN PATENT APPLICATION

(11) **EP 3 932 966 A1**
(43) Date of publication of application: **05.01.2022**
(21) Application number: 20183187.2
(22) Date of filing: 30.06.2020
(51) Int. Cl.: C08G 18/12, C08G 18/30, C08G 18/40, C08G 18/42, C08G 18/48, C08G 18/62, C08G 18/69, C08G 18/76, C09J 175/04, C09J 175/06, C09J 175/08, C09J 175/14

(54) **ADHESIVE COMPOSITION FOR BONDING POLAR AND NON-POLAR SUBSTRATES**

(71) Applicant: Henkel AG & Co. KGaA, 40589 Düsseldorf (DE)
(72) Inventor: BLODAU, Marcel, 47807 Krefeld (DE); PICON, Miranda Vanessa Alexandra, 41469 Neuss (DE); NISTERS, Katrin, 40468 Düsseldorf (DE)

(57) **Abstract**

The present invention refers to an adhesive composition comprising a polyurethane obtained from a reaction mixture comprising at least one polyol, a specialized polybutadiene and at least one diisocyanate compound, the use of the adhesive composition for bonding polar and non-polar substrates as well as a process for bonding at least two substrates using the adhesive composition.

## Description

The present invention refers to an adhesive composition comprising a polyurethane obtained from a reaction mixture comprising at least one polyol, a specialized polybutadiene and at least one diisocyanate compound, the use of the adhesive composition for bonding polar and non-polar substrates as well as a process for bonding at least two substrates using the adhesive composition.

By establishing 5G as the cellular standard in mobile technology, it is expected that the new networks will not only serve as cell phones like existing cellular networks but also be used as general internet service providers for laptops and desktop computers due to the increased bandwidth of 5G. All 5G wireless devices are expected to be connected to the internet and telephone network by radio waves through local antenna. The new technology requires different and new materials which allow for efficient data transfer which results in electronic devices being made of a variety of different materials such as metals, polycarbonates or polyamides. The problem of mixed materials is not only limited to the production of modern mobile electronic devices but is also encountered in a number of industries such as automotive industry, here in particular interior lamination. The mixture of materials thus presents a major challenge for adhesive technology since so far achieving satisfactory results in bonding polar to non-polar substrates with common adhesives and equipment is problematic.

Although a huge number of polyurethane adhesives are available for a variety of applications, bonding of non-polar substrates, i.e. low surface energy substrates, could up to date not be realized due to the low adhesion of the polyurethanes. Other adhesives like those based on polyolefins show good adhesion to non-polar substrates but only low adhesion to polar substrates such as polyamides. There is therefore still the need for adhesives which are able to bond different substrates, i.e. having good adhesion properties to polar as well as non-polar substrates.

In light of the above, the object of the present invention is the provision of an adhesive composition which can be used to bond polar to non-polar substrates and such addresses the need for a universally applicable adhesive.

It was surprisingly found that the object is solved by an adhesive composition comprising a polyurethane which is obtained from a reaction mixture comprising polyols, a special polybutadiene and an NCO-terminated compound.

Therefore, a first object of the present invention is an adhesive composition comprising a polyurethane obtained from a reaction mixture comprising:
i) 5 to 40 wt.-% of at least one polyol;
ii) 5 to 40 wt.-% of a hydroxy terminated polybutadiene polymer; and
iii) 10 to 45 wt.-% of at least one NCO-terminated compound,
the wt.-% being based on the total weight of the reaction mixture.

Within the course of the present invention, the total weight of the reaction mixture refers to the total weight of the solvent-free reaction mixture.

It was surprisingly found that the adhesive composition according to the invention allows bonding of polar to non-polar substrates using existing application equipment. In particular, it was surprisingly found that the inventive adhesive composition could be used to bond the widely used non-polar substrate polybutylene terephthalate (PBT), being favoured in the production of mobile devices for its good transfer property of radio waves, to polar substrates such as polyamides.

In a preferred embodiment, the hydroxy terminated polybutadiene polymer is comprised in the reaction mixture in an amount of 5 to 35 wt.-%, preferably 10 to 30 wt.-%, based on the total weight of the reaction mixture. Without being bound by theory, it is believed that the polybutadiene used in the reaction mixture, acting as a special polyol component, is incorporated into the polyurethane polymer, resulting in a polymer having a binary character showing good adhesion properties to polar as well as non-polar substrates. Best results were obtained when low-molecular weight polybutadiene polymers were employed. Therefore, an embodiment of the present invention is preferred wherein the hydroxy terminated polybutadiene polymer has a number average molecular weight Mn of 500 to 5000 g/mol, preferably 1500 to 3500 g/mol, more preferably 1500 to 3000 g/mol, determined via GPC.

In order to achieve good adhesion properties to both kind of substrates while maintaining a viscosity required for most applications, it has been advantageous to employ a polybutadiene polymer with a moderate reactivity. Therefore, in a preferred embodiment, the hydroxy terminated polybutadiene polymer employed in the present invention has a hydroxy functionality of 1.5 to 3, preferably 1.5 to 2.5. The hydroxy functionality serves as a measure for the number of reactive hydroxy groups and can be determined according to DIN 53240.

The reaction mixture employed in the course of the present invention preferably comprises the at least one polyol in an amount of 5 to 35 wt.-%, more preferably 10 to 25 wt.-%, based on the total weight of the reaction mixture. In a preferred embodiment, the at least one polyol is a mixture of polyols, preferably a mixture of polyesterpolyols and polyetherpolyols, preferably comprising two or three active hydroxy groups per molecule. There are no special requirements with regard to the polyols employed, rather they can be used to adapt the properties of the inventive adhesive composition according to need.

The polyurethane comprised in the inventive adhesive composition is obtained from a reaction mixture which comprises at least one NCO-terminated compound. A NCO-terminated compound as referred to in the present invention is a compound having free NCO-groups, such as diisocyanates. Preferably, the NCO-terminated compound is comprised in the reaction mixture in an amount of 15 to 40 wt.-%, preferably 15 to 35 wt.-%, based on the total weight of the reaction mixture. In a preferred embodiment, the NCO-terminated compound is selected from the group consisting of 4,4'-methylene diphenyl diisocyanate and its isomers and hexamethylene diisocyanate and its oligomers, in particular its trimers.

In orderto adjust the properties of the inventive adhesive composition, the composition may comprise further components such as additives, anti-foaming agents and drying agents. Also, the properties of the adhesive composition may be modified by adapting the comprised polyurethane which in turn can be modified by the choice of the components of the reaction mixture from which it is obtained. In a preferred embodiment, the reaction mixture may further comprise an acrylic polymer having hydroxy groups. The acrylic polymer having hydroxy groups can act as a further polyol compound in the formation of the urethane bonds. Preferably, the acrylic polymer is comprised in the reaction mixture in an amount of 5 to 25 wt.-%, preferably 10 to 20 wt.-%, based on the total weight of the reaction mixture.

The adhesive composition according to the invention is particularly suited for the production of any articles where the different components are normally glued together, such as mobile electronic devices, and applications in textile or automotive industry. Therefore, the inventive adhesive composition is preferably a 1K polyurethane composition. In an especially preferred embodiment, the inventive adhesive composition is a reactive hot melt adhesive.

The inventive adhesive composition is characterized by its ability to bond polar as well as non-polar substrates, having good adhesion properties in respect to both types of substrates. Although adhesives are known which exhibit adhesion strength in the range of 10 and more MPa to one or the other substrate type, so far, an adhesive composition which exhibits similar adhesion strength to both kinds of substrates has been missing to date. The adhesive composition according to the present invention remedies said drawback and can be used to satisfactorily bond polar to non-polar substrates. Therefore, in a preferred embodiment, the adhesive composition exhibits an adhesion strength (lap shear strength) to polar as well as non-polar substrates of at least 5.0 MPa, preferably at least 9.0 MPa, determined according to DIN 1465 and ASTM 1002.

Another object of the present invention is the use of the adhesive composition according to the invention for bonding substrates, preferably polar and non-polar substrates, in particular substrates selected from the group consisting of metals, polyolefines, polycarbonates, polyamides, polyethers and polyesters. Preferably, the inventive adhesive composition is used to bond polybutylene terephthalate (PBT) to other substrates, preferably polar substrates. In a preferred embodiment, the adhesive composition according to the invention is used in the manufacture of mobile devices such as mobile phones and tablet computer, as well as in textile industries and automotive industry.

A further object of the present invention is a process for bonding at least two substrates, the process comprising the steps of:
a) providing a first substrate and a second substrate to be bonded;
b) applying an adhesive composition according to the present invention to the surface of the first and/or second substrate;
c) sandwiching the adhesive composition between the first and second substrate; and
d) curing the adhesive composition.

It was surprisingly found that the adhesive composition can be applied in processes for bonding non-polar to polar substrates. Even without the commonly necessary pre-treatment of the surface to be bonded, excellent adhesion between the substrates could be observed. Therefore, in a preferred embodiment, the process according to the invention is conducted without any pre-treatment of the surfaces to be bonded.

Although the adhesion properties obtained in the inventive process already exceed those observed using common adhesive compositions, the results could be even further improved if the surfaces of the subjects to be bonded were pre-treated to ensure that any residues which might affect the adhesion properties were eliminated. Therefore, in an alternatively preferred embodiment, the process according to the invention comprises a step of pre-treating the surfaces to be bonded before applying the adhesive composition. Pre-treatment of the surface preferably consists of flame and/or plasma treatment.

The adhesive composition employed in the process according to the invention is preferably a 1K reactive hot melt composition. Therefore, the adhesive composition is preferably applied at a temperature of 60 to 200 °C, preferably 80 to 160 °C. Curing of the adhesive composition to obtain the bonded object is preferably conducted for 12 hours to 7 days (168 hours), preferably 24 to 72 hours, especially 48 to 72 hours, at ambient temperatures.

Although there are no special requirements when it comes to the substrates which can be employed in the inventive process, the inventive process is particular advantageous for bonding non-polar to polar substrates. Therefore, in a preferred embodiment, the substrates employed in the inventive process are selected from the group consisting of polar and non-polar substrates, in particular substrates selected from the group consisting of metals, polyolefines, polycarbonates, polyamides, polyethers and polyesters. Preferably, the inventive adhesive composition is used to bond polybutylene terephthalate (PBT) to other substrates, preferably polar substrates.

The present invention will be illustrated in more detail by the following examples which are by no means to be understood as limiting the scope and spirit of the invention.

### Examples:

The following compositions were prepared, and the adhesive properties evaluated on a number of different substrates. The adhesive composition was applied in a thickness of less than 1.5 mm using an application robot model "Loctite 300 Series Benchtop Roboter".

The molecular weight was determined via GPC and the hydroxy number was determined according to DIN EN ISO 2554. The amounts in Table 1 are given in wt.-%, based on the total weight of the respective composition.

The following components were used:
Polyetherdiol 1: Polyetherdiol, Mn = 1000 g/mol
Polyetherdiol 2: Polyetherdiol, Mn = 2000 g/mol
Polyesterpolyol: Polyesterpolyol having a molecular weight Mn of 3500 g/mol
Polyethertriol 1: Polyethertriol having a molecular weight Mn of 255 g/mol
Polyethertriol 2: Polyethertriol having a molecular weight Mn of 1078 g/mol
HTPBD: hydroxyl-terminated polybutadiene polymer, having a hydroxy number of 44-51 mg KOH/g, and a molecular weight Mn of 2500 g/mol.
Acrylic polymer: amine functional low molecular weight resin
4,4'-MDI: 4,4'-methylene diphenyldiisocyanate

**Table 1:**

| | **Ex-1** | **Ex-2** | **Ex-3** | **Ex-4** | **Comp-1** |
|---|---|---|---|---|---|
| Polyetherpolyol 1 | 11.7 | 11.5 | - | - | |
| Polyetherpolyol 2 | - | - | 12 | 13.2 | 21.3 |
| Polyesterpolyol | 19.4 | 19 | 19.9 | 16.5 | 25.6 |
| Polyethertriol 1 | - | - | - | 6.7 | - |
| Polyethertriol 2 | 10,3 | 9.6 | 9.9 | - | - |
| HTPBD | 22.2 | 24 | 24 | 20.1 | |
| Acrylic Polymer | 15.0 | 15.2 | 15.4 | 13.3 | 21.13 |
| 4,4'-MDI | 20.5 | 19.7 | 17.8 | 29.4 | 14.07 |
| Additives | 0.9 | 0.9 | 0.9 | 0.9 | 0.9 |

The NCO content of the obtained polyurethanes, determined according to the Spiegelberger method (DIN EN ISP 11909) is summarized in Table 1a:

**Table 1a:**

| Example | NCO content [wt.-%] |
|---|---|
| Ex-1 | 3.46 |
| Ex-2 | 3.31 |
| Ex-3 | 2.99 |
| Ex-4 | 4.94 |
| Comp-1 | 2.36 |

The compositions were applied to different substrates and the adhesive properties determined according to DIN 1465 and ASTM 1002.

The following substrates were tested. The adhesion strengths were measured after 24 h curing at ambient temperatures. The results are listed in Tables 2 to 7 below.
PBT 40GF: 40% glass fiber reinforced, black pigmented, medium viscous poly(butylene terephthalate)
PBT S600: white pigmented, medium viscous poly(butylene terephthalate)
PP: Polypropylene
PP black: Polypropylene, black pigmented
PC: Polycarbonate
PA: Polyamide, 30% glass fiber reinforced, black pigmented
PE: Polyethylene

**Table 2:**

| | **MPa ( < 1,5mm Adhesive width)** | | | | | | |
|---|---|---|---|---|---|---|---|
| **Example 1** | **PBT40GF** | **PBT S600** | **PP** | **PP black** | **PC** | **PA** | **PE** |
| **Without pre-treatment** | 5.3 | 5.2 | 2.2 | 3.4 | 20.9 | 9.2 | 2.0 |
| **Flame** | 7.9 | 5.1 | 6.6 | 4.7 | 10 | 14.3 | 7.1 |
| **Plasma** | 10.4 | 3.8 | 5.6 | 9.2 | 15.4 | 15.9 | 9.4 |

**Table 3:**

| | **MPa ( < 1,5mm Adhesive width)** | | | | | | |
|---|---|---|---|---|---|---|---|
| **Example 2** | **PBT40GF** | **PBT** S600 | **PP** | **PP black** | **PC** | **PA** | **PE** |
| **Without pre-treatment** | 14.1 | 6.6 | 1.7 | 2.5 | 19.1 | 11.3 | - |
| **Flame** | 13.9 | 9.9 | 3.8 | 3.2 | 14.8 | 11.3 | 4.2 |
| **Plasma** | 14.3 | 13.0 | 7.6 | 5.8 | 15.1 | 16.8 | 7.1 |

**Table 4:**

| | **MPa ( < 1,5mm Adhesive width)** | | | | | | |
|---|---|---|---|---|---|---|---|
| **Example 3** | **PBT40GF** | **PBT S600** | **PP** | **PP black** | **PC** | **PA** | **PE** |
| **Without pre-treatment** | 12.2 | 6.7 | 1.6 | 4.3 | 19.1 | 7.8 | 1.5 |
| **Flame** | 11.6 | 16.7 | 9.3 | 5.5 | 10.9 | 10 | 6.7 |
| **Plasma** | 13.1 | 4.4 | 9.5 | 7.8 | 11 | 9.1 | 7.9 |

**Table 5:**

| | **MPa ( < 1,5mm Adhesive width)** | | | | | | |
|---|---|---|---|---|---|---|---|
| **Example 4** | **PBT40GF** | **PBT S600** | **PP** | **PP black** | **PC** | **PA** | **PE** |
| **Without pre-treatment** | 8.4 | 11.3 | - | - | 20.7 | 9.8 | - |
| **Flame** | 6.7 | 7.6 | 6.9 | 7.4 | 11.3 | 7.2 | - |
| **Plasma** | 9.4 | 10.3 | 9.2 | 4.4 | 13.9 | 5.2 | 5.6 |

**Table 6:**

| | **MPa (** < **1,5mm Adhesive width)** | | | | | | |
|---|---|---|---|---|---|---|---|
| **comparative Example 1** | **PBT40GF** | **PBT S600** | **PP** | **PP black** | **PC** | **PA** | **PE** |
| **Without pre-treatment** | 4.3 | 5.2 | 0.9 | 2.5 | 10.1 | 4.5 | - |
| **Flame** | 7.5 | 5.6 | 2.8 | 3.1 | 4.5 | 5.6 | 2.3 |
| **Plasma** | 3.5 | 6.5 | 3 | 3.1 | 5.9 | 7.6 | 4.5 |

As is apparent from the presented data, the adhesive compositions according to the invention can be applied to a variety of substrates, polar as well as non-polar, with excellent adhesion properties in every case. In contrast thereto, the common adhesive composition did only achieve satisfactory results on one type of substrate, i.e. polycarbonate.

## Claims

1. Adhesive composition comprising a polyurethane obtained from a reaction mixture comprising:
i) 5 to 40 wt.-% of at least one polyol;
ii) 5 to 40 wt.-% of a hydroxy terminated polybutadiene polymer; and
iii) 10 to 45 wt.-% of at least one NCO-terminated compound,
the wt.-% being based on the total weight of the reaction mixture.

2. Adhesive composition according to claim 1, **characterized in that** the hydroxy terminated polybutadiene polymer is comprised in the reaction mixture in an amount of 5 to 35 wt.-%, preferably 10 to 30 wt.-%, based on the total weight of the reaction mixture

3. Adhesive composition according to any of claims 1 or 2, **characterized in that** the hydroxy terminated polybutadiene polymer has an average molecular weight (Mn) of 500 to 5000 g/mol, preferably 1500 to 3500 g/mol, more preferably 1500 to 3000 g/mol, determined via GPC.

4. Adhesive composition according to any of the forgoing claims, **characterized in that** hydroxy terminated polybutadiene polymer has a hydroxy functionality of 1.5 to 3, preferably 1.5 to 2.5.

5. Adhesive composition according to any of the forgoing claims, **characterized in that** the reaction mixture employed in the course of the present invention comprises the at least one polyol in an amount of 5 to 35 wt.-%, more preferably 10 to 25 wt.-%, based on the total weight of the reaction mixture.

6. Adhesive composition according to any of the forgoing claims, **characterized in that** the NCO-terminated compound is comprised in the reaction mixture in an amount of 15 to 40 wt.-%, preferably 15 to 35 wt.-%, based on the total weight of the reaction mixture.

7. Adhesive composition according to any of the forgoing claims, **characterized in that** the reaction mixture further comprises an acrylic polymer having hydroxy groups.

8. Adhesive composition according to claim 7, **characterized in that** the acrylic polymer is comprised in the reaction mixture in an amount of 5 to 25 wt.-%, preferably 10 to 20 wt.-%, based on the total weight of the reaction mixture.

9. Adhesive composition according to any of the forgoing claims, **characterized in that** the adhesive composition is a 1K polyurethane composition, preferably a reactive hot melt adhesive.

10. Adhesive composition according to any of the forgoing claims, **characterized in that** the adhesive composition exhibits an adhesion strength to polar as well as non-polar substrates of at least 5.0 MPa, preferably at least 9.0 MPa, determined according to DIN 1465 / ASTM 1002.

11. Use of the adhesive composition according any of claims 1 to 10 for bonding substrates, preferably polar and non-polar substrates, in particular substrates selected from the group consisting of metals, polyolefines, polycarbonates, polyamides, polyethers and polyesters.

12. Use according to claim 11 in the manufacture of mobile devices such as mobile phones and tablet computer, in textile industries and automotive industry.

13. Process for bonding at least two substrates, the process comprising the steps of:
a) providing a first substrate and a second substrate to be bonded;
b) applying an adhesive composition according to the present invention to the surface of the first and/or second substrate;
c) sandwiching the adhesive composition between the first and second substrate; and
d) curing the adhesive composition.

14. Process according to claim 13, **characterized in that** the process is conducted without any pre-treatment of the surfaces to be bonded.

15. Process according to any of claims 13 and 14, **characterized in that** the adhesive composition is applied at a temperature of 60 to 200 °C, preferably 80 to 160 °C.
